# EUROPÄISCHE PATENTSCHRIFT

(11) **EP 1 762 125 B1**
(45) Veröffentlichungstag und Bekanntmachung des Hinweises auf die Patenterteilung: **14.04.2010**
(21) Anmeldenummer: 05746175.8
(22) Anmeldetag: 27.05.2005
(51) Int. Cl.: H05B 37/02

(54) **AKTOR MIT SPEICHERTEIL FÜR GEBÄUDEMANAGEMENTSYSTEM**
ACTUATOR COMPRISING A MEMORY PART FOR A BUILDING MANAGEMENT SYSTEM
ACTIONNEUR A MEMOIRE DESTINE A UN SYSTEME DE GESTION D'IMMEUBLE

(30) Priorität: 28.05.2004 DE 102004026178; 16.08.2004 DE 102004039677
(43) Veröffentlichungstag der Anmeldung: 14.03.2007
(73) Patentinhaber: Zumtobel Lighting GmbH, 6850 Dornbirn (AT)
(72) Erfinder: JAHN, Gerhard, A-6911 Lochau (AT); FA, Jozsef, A-6850 Dornbirn (AT)
(74) Vertreter: Thun, Clemens
(86) Internationale Anmeldenummer: PCT/EP2005/005723
(87) Internationale Veröffentlichungsnummer: WO 2005/117503

(56) Entgegenhaltungen:
- EP-A- 0 966 183
- EP-A- 1 435 678
- WO-A-00/43966
- DE-A1- 19 611 161
- DE-U- 20 100 654
- DE-U1- 29 906 702
- FR-A- 2 743 866
- US-A- 6 118 230
- US-A1- 2003 227 267
- US-A1- 2004 100 396
- US-B1- 6 441 565
- US-B1- 6 546 435
- LUGER S ET AL: "BELEUCHTUNG WIRD BUSFAEHIG" ELEKTRONIK, WEKA FACHZEITSCR.-VERLAG, MUNCHEN, DE, Bd. 41, Nr. 26, 22. Dezember 1992 (1992-12-22), Seiten 26-30, XP000327405 ISSN: 0013-5658

## Beschreibung

Die vorliegende Erfindung betrifft ein Gebäudemanagementsystem zur Steuerung mehrerer verteilt angeordneter Aktoren gemäß dem Oberbegriff des Anspruchs 1 sowie einen Aktor, der zur Verwendung in einem entsprechenden Gebäudemanagementsystem vorgesehen ist und ein Speicherteil zum Speichern funktionsrelevanter Informationen aufweist. Insbesondere betrifft die vorliegende Erfindung ein Beleuchtungssystem mit einer zentralen Steuereinheit zur Steuerung mehrerer verteilt angeordneter Leuchten sowie eine entsprechende Leuchte.

Elektronische Vorschaltgeräte zum Betreiben von Lampen, insbesondere von Gasentladungslampen, sind üblicherweise derart ausgelegt, dass sie zur Ansteuerung unterschiedlicher Lampentypen verwendet werden und in unterschiedlichen Leuchtentypen zum Einsatz kommen können. Elektronische Vorschaltgeräte werden dementsprechend in sehr großer Stückzahl produziert und am Ende ihres Fertigungsprozesses in eine Leuchte eingebaut, so dass die Mechanik der Leuchte und die Elektronik, d.h. das elektronische Vorschaltgerät, eine Einheit bilden. Während des abschließenden Fertigungsprozesses wird dann das Vorschaltgerät mit leuchtenspezifischen Informationen programmiert, um hierdurch die Funktionalität des Vorschaltgeräts an den Leuchtentyp anzupassen. Dieses Programmieren kann bspw. durch Einbrennen entsprechender Informationen in ein Speicherelement des Vorschaltgeräts erfolgen.

Durch die oben beschriebene Maßnahme des Programmierens kann zwar sichergestellt werden, dass die Vorschaltgeräte in unterschiedlichen Leuchten zum Einsatz kommen können und verschiedene Lampentypen geeignet ansteuern, allerdings können sich Probleme daraus ergeben, dass die Lebensdauer und Ausfallsicherheit der mechanischen Elemente der Leuchte zum Teil deutlich höher ist als jene der Vorschaltgeräte. Mit anderen Worten, es kann durchaus vorkommen, dass im Laufe der Lebenszeit einer Leuchte das Vorschaltgerät aufgrund eines Defekts oder anderer Verschleißerscheinungen ausgetauscht werden muss. In diesem Fall gehen dann allerdings die werksseitig in das ursprüngliche Vorschaltgerät einprogrammierten Informationen verloren. Auch die während der Inbetriebnahme der Leuchte in dem Beleuchtungssystem einprogrammierte Informationen, bspw. eine für das Beleuchtungssystem gültige Betriebs- oder Gruppenadresse zur individuellen Ansteuerung sowie Informationen hinsichtlich der zulässigen Betriebsdauer der Leuchtmittel werden bei einem Auswechseln des Vorschaltgeräts gelöscht. So ist aus der US 6,693,397 B1 beispielsweise eine Leuchte zur Verwendung bei endoskopischen Untersuchungen bekannt, bei der eine auswechselbare Lampeneinheit einen Datenspeicher zur Aufzeichnung der Betriebszeiten aufweist. Wenn nach einer vorgegebenen Gesamt-Betriebszeit die fest mit dem Speicher verbundene Lampeneinheit ausgewechselt wird, wird zwangsläufig auch der Speicher ersetzt, so dass in dem Speicher enthaltene zusätzliche Informationen, welche beispielsweise den allgemeinen Betrieb der Leuchte betreffen, neu eingeschrieben werden müssten.

Eine ähnliche Problematik wie oben beschrieben ergibt sich allgemein bei sog. Gebäudemanagementsystemen, bei denen mehrere verteilt angeordnete sog. Aktoren von einer zentralen Steuereinheit angesteuert werden. Unter den Begriff Aktoren fallen dabei sowohl die oben beschriebenen Elemente der Beleuchtungstechnik, wobei auch Notlicht-Inverter, Betriebsgeräte für Leuchtdioden oder Halogenlampen hinzuzurechnen sind, als auch Heizungs-, Lüftungs- oder Klimaelemente sowie bspw. Jalousien zur Abdunklung von Fenstern und dergleichen. Derartige Aktoren weisen üblicherweise ein Steuergerät auf, welches dazu ausgebildet ist, Steuerbefehle von der zentralen Steuereinheit des Beleuchtungs- oder allgemein Gebäudemanagementsystems zu empfangen und den Aktor dann in Abhängigkeit von diesen Steuerbefehlen entsprechend zu betreiben. Waren diese Aktoren bislang reine Befehlsempfänger, die von einem zentralen Rechner aus angesteuert wurden, so geht mittlerweile die Tendenz in verstärktem Maße dahin, dass die Aktoren selbst eine gewisse Intelligenz aufweisen und bestimmte Programme auf den Empfang von Einsatzbefehlen hin abarbeiten. Ferner werden verstärkt verschiedenartige Bussysteme meist in hierarchischer Weise gestaffelt in einem Gebäude gekoppelt. So kann beispielsweise eine durch einen Rechner gebildete zentrale Steuereinheit mittels eines TCP-IP Busses mit einer oder mehreren lokalen Steuereinheiten verbunden sein, die ihrerseits mit Aktoren auf Basis eines anderen Bussystems, beispielsweise des in der Beleuchtungsindustrie verwendeten DALL-Busses, verbunden sind bzw. kommunizieren. Üblich ist ferner, über sogenannte Gateways oder Schnittstellenmodule unterschiedliche Bussysteme miteinander zu koppeln.

Durch die Zunahme der lokalen "Intelligenz" der Aktoren wird nunmehr zwar eine immer komfortablere Ansteuerungsmöglichkeit geschaffen, allerdings können sich hieraus auch Probleme und finanzielle Risiken für den Lieferanten der Aktoren sowie den Betreiber entsprechender Gebäudemanagementsysteme ergeben. Diese Probleme können sich in Termin-Verzögerungen und Kostenüberschreitungen bei der erforderlichen Erst-Programmierung der Anlage bemerkbar machen. Darüber hinaus ist eine nachträgliche Funktions-Änderung oder -Erweiterung der Anlage mit teilweise sehr hohen Programmierungskosten verbunden. Schließlich ergibt sich analog zu dem oben geschilderten Fall des Austauschs eines defekten Vorschaltgeräts die Problematik, dass bei einem Geräteausfall und dem Einsatz eines entsprechenden Ersatzgeräts die ursprünglich programmierten Informationen verloren sind und dementsprechend eine Neuprogrammierung erforderlich ist, wodurch hohe Zusatzkosten anfallen.

Eine weitere Problematik dieser modernen Aktoren besteht schließlich auch darin, dass aufgrund der Vielzahl der Funktionen und Betriebsmöglichkeiten dieser Geräte verschiedenste Ursachen für einen evtl. Defekts in Frage kommen. So kann ein Ausfall eines Lampenbetriebsgeräts beispielsweise auf einen Betrieb der Lichtquelle innerhalb eines kritischen Betriebsparameterbereichs zurückzuführen sein, allerdings könnte auch einfach die vorgesehene Betriebsdauer des Geräts oder der Lichtquelle zwischenzeitlich überschritten worden sein. Fällt nun ein Lampenbetriebsgerät bzw. allgemein ein Aktor tatsächlich aus, so ist es oftmals sehr schwer, die tatsächliche Ursache für den Ausfall in Erfahrung zu bringen und - sofern möglich - evtl. Maßnahmen zu treffen, um derartige Schwierigkeiten in Zukunft zu vermeiden.

Ein Beispiel für ein Gebäudemanagementsystem findet sich in der FR 2 743 866 A1. Das dort beschriebene Gebäudemanagementsystem dient zur Steuerung verteilt angeordneter Aktoren und weist eine zentrale Steuereinheit sowie mindestens einen von der zentralen Steuereinheit angesteuerten Aktor auf, wobei dieser Aktor ein Steuergerät, welches ausgebildet ist, Steuerbefehle von der zentralen Steuereinheit zu empfangen und den Aktor in Abhängigkeit von diesen Steuerbefehlen zu betreiben, sowie ein Speicherteil zum Steuern funktionsrelevanter Informationen aufweist, wobei das Speicherteil von dem Steuergerät getrennt oder trennbar ist.

Der vorliegenden Erfindung liegt nunmehr die Aufgabe zugrunde, die oben geschilderten Probleme bei Beleuchtungssystemen bzw. bei Gebäudemanagementsystemen im allgemeinen zu vermeiden. Ferner soll eine Möglichkeit angegeben werden, den Betriebszustand eines Aktors besser überwachen zu können, um beispielsweise das Auffinden von Ursachen für evtl. Defekte des Geräts zu vereinfachen.

Die Aufgabe wird durch ein Gebäudemanagementsystem, welches die Merkmale des Anspruchs 1 oder 17 aufweist, sowie durch einen Aktor zur Verwendung in einem Gebäudemanagementsystem gemäß Anspruch 20 bzw. ein Lampenbetriebsgerät gemäß Anspruch 35 gelöst.

Gemäß einem ersten Aspekt der vorliegenden Erfindung wird vorgeschlagen, den zur Verwendung in dem Gebäudemanagementsystem vorgesehen Aktor, der ein Steuergerät, welches dazu ausgebildet ist, Steuerbefehle von der zentralen Steuereinheit zu empfangen und den Aktor in Abhängigkeit von diesen Steuerbefehlen zu betreiben, sowie ein Speicherteil zum Speichern von funktionsrelevanten Informationen aufweist, derart auszugestalten, dass das Speicherteil von dem Steuergerät getrennt oder trennbar ist. Hierdurch wird die Möglichkeit eröffnet, das Steuergerät des Aktors, also bspw. das elektronische Vorschaltgerät einer Leuchte getrennt von dem Speicherteil auszuwechseln, so dass bei einem Austausch des Steuergeräts das neue Steuergerät auf die ursprünglich in dem Aktor bzw. der Leuchte enthaltenen Informationen zurückgreifen kann. Im Gegensatz zu den bislang bekannten Lösungen ist somit bei einem Ersatz des Steuergeräts keine aufwendige Neuprogrammierung erforderlich, da die ursprünglich zur Verfügung gestellten Informationen nach wie vor in dem Aktor bzw. der Leuchte verbleiben können. Der mit einer Neuprogrammierung des Gerätes verbundene nicht unerhebliche Kostenaufwand kann somit durch die erfindungsgemäße Lösung vermieden werden.

In einer einfachen Variante der vorliegenden Erfindung kann vorgesehen sein, dass das Speicherteil fest in den Aktor integriert ist, während hingegen das Steuergerät getrennt von dem Speicherteil aus dem Aktor entfernt und durch ein gleichartiges neuwertiges Gerät ersetzt werden kann. Darüber hinaus wäre es allerdings auch denkbar, das Speicherteil ebenfalls auswechselbar zu gestalten, was weitere Vorteile hinsichtlich der Programmiermöglichkeiten mit sich bringen würde. So ist zwar üblicherweise vorgesehen, dass die Erst-Programmierung des Speicherteils werksseitig, d.h. noch vor der Inbetriebnahme des Aktors erfolgt. Soll allerdings zu einem späteren Zeitpunkt eine Änderung der Programmierung vorgenommen werden, so kann dies bei einem auswechselbaren Speicherteil in einfacher Weise dadurch erfolgen, dass das alte Speicherteil durch ein neues, bereits mit den neuen Betriebsinformationen beschriebenes Element ersetzt wird. In diesem Fall kann ebenfalls der Aufwand zur Neuprogrammierung der Geräte verringert werden, da die neuen Speicherteile mit den neuen Daten bereits an einer zentralen Stelle - beispielsweise beim Hersteller der Aktoren oder der für das Beleuchtungs- oder Gebäudemanagementsystem verantwortlichen Firma - programmiert und dann in einfacher Weise in die entsprechenden Aktoren eingesetzt werden können.

Die Speicherteile der erfindungsgemäßen Aktoren können sowohl derart ausgestaltet sein, dass sie ausschließlich lesbar sind, als auch derart, dass sie sowohl lesbar als auch beschreibbar sind. Die erstgenannte Variante ist dann ausreichend, wenn eine einmalige Programmierung des Aktors ausreichend ist oder bei einer Neuprogrammierung der Aktoren das gesamte Speicherteil durch ein neues ersetzt werden soll. Bei komplexeren Aktoren hingegen ist die Möglichkeit, das Speicherteil zu beschreiben, von Vorteil, da hierdurch für das Steuergerät die Möglichkeit geschaffen wird, während des Betriebs noch Informationen in dem Speicherteil abzulegen. Es wäre in diesem Fall dann beispielsweise denkbar, dass das Steuergerät permanent Informationen hinsichtlich des aktuellen Betriebszustands des Aktors in den Speicher schreibt, so dass bspw. bei einem späteren Defekt des Aktors festgestellt werden kann, was die Ursache für den Fehler war bzw. wer - der Hersteller des Aktors oder der Benutzer - für den Defekt verantwortlich war und dementsprechend die Kosten für die Reparaturmaßnahmen zu tragen hat.

Die Datenübermittlung zwischen dem Speicherteil und dem Steuergerät kann sowohl über Steckkontakte als auch drahtlos erfolgen, wobei im zweiten Fall das Speicherteil vorzugsweise, durch ein sog. RFID-(Radio Frequency Identification)-Element gebildet sein kann. Auch die Verwendung einer sog. SIM-(Subscriber Identity Module)-Karte als Speicherteil wäre denkbar.

Neben der Möglichkeit des Datenaustauschs zwischen dem lokalen Steuergerät, d.h. den Steuergerät des Aktors und dem Speicherteil wäre ergänzend auch denkbar, dass das Speicherteil unmittelbar durch die zentrale Steuereinheit lesbar und/oder beschreibbar ist. In diesem Fall bestünde auf einfache Weise die Möglichkeit, von einer zentralen Stelle aus den Aktor bzw. die Leuchte neu zu programmieren.

Der zuvor erwähnte Gedanke, regelmäßig Betriebsdaten eines Aktors zu erfassen und in einem nichtflüchtigen Speicher abzulegen, stellt einen zweiten Aspekt der vorliegenden Erfindung dar, der unabhängig davon zum Einsatz kommen kann, ob der Speicher vom Steuerteil getrennt werden kann oder nicht. Durch das regelmäßige Aufzeichnen von Betriebsdaten im Sinne eines "Fahrtenschreibers" besteht die Möglichkeit, auch nach einem evtl. Ausfall des Geräts nähere Informationen über den vorherigen Betrieb zu gewinnen und möglicherweise die Ursache für den Ausfall des Geräts zu ermitteln. Auch Wartungsarbeiten werden auf diese Weise deutlich vereinfacht, da beispielsweise nach einem Auslesen der in dem Speicher abgelegten Informationen festgestellt werden kann, ob eine bestimmte Betriebsdauer überschritten wurde und dementsprechend evtl. ein Austausch des Geräts in Betracht gezogen werden sollte. Ferner können in einfacher Weise solche Geräte ermittelt werden, welche z.B. eine ihnen zugeordnete Lichtquelle ausserhalb zulässiger Betirebsparameter betreiben und dementsprechend gewartet (z.B. neu kallibriert) oder sogar ersetzt werden sollten. Wesentlich hierbei ist, dass das Gerät die Speicherung der Betriebsdaten selbständig vornimmt und somit selbständig ein Protokoll über den Betrieb erstellt, wobei die hierbei gesammelten Daten dann zu Wartungszwecken ausgelesen werden können.

Das Auslesen der Daten kann dabei auf unterschiedliche Weise erfolgen, wobei z.B. die den Aktor mit dem Gesamt-System verbindende Schnittstelle genutzt werden könnte. Auch der Einsatz einer separaten Schnittstelle, an welche beispielsweise gezielt ein Diagnose- oder Wartungsgerät zum Auslesen der gespeicherten Betriebsdaten angeschlossen werden könnte, wäre denkbar. Schließlich könnte das Auslesen der gespeicherten Informationen auch drahtlos bzw. durch die vorübergehende Entnahme des Speicherteils erfolgen.

Durch diesen zweiten erfindungsgemäßen Aspekt werden somit insbesondere die Möglichkeiten zur Überwachung des Betriebs des Aktors und damit zum Feststellen evtl. Fehlzustände verbessert.

Nachfolgend soll die Erfindung anhand der beiliegenden Zeichnung näher erläutert werden. Es zeigen:
- Fig. 1: den hierarchischen Aufbau eines komplexen Gebäudemanagementsystems;
- Fig. 2: das vereinfachte Schema eines Gebäudemanagementsystems, bei dem erfindungsgemäß ausgestaltete Aktoren durch eine zentrale Steuereinheit angesteuert werden;
- Fig. 3: den Aufbau eines erfindungsgemäßen Aktors anhand des Beispiels einer Leuchte;
- Fig. 4: ein bevorzugtes Ausführungsbeispiel eines Speicherteils in Form eines RFID-Elements und
- Fig. 5: ein zweites Ausführungsbeispiel eines Steuergeräts in Form eines elektronischen Vorschaltgeräts, welches zum selbständigen Aufzeichnen von Betriebsdaten ausgebildet ist.

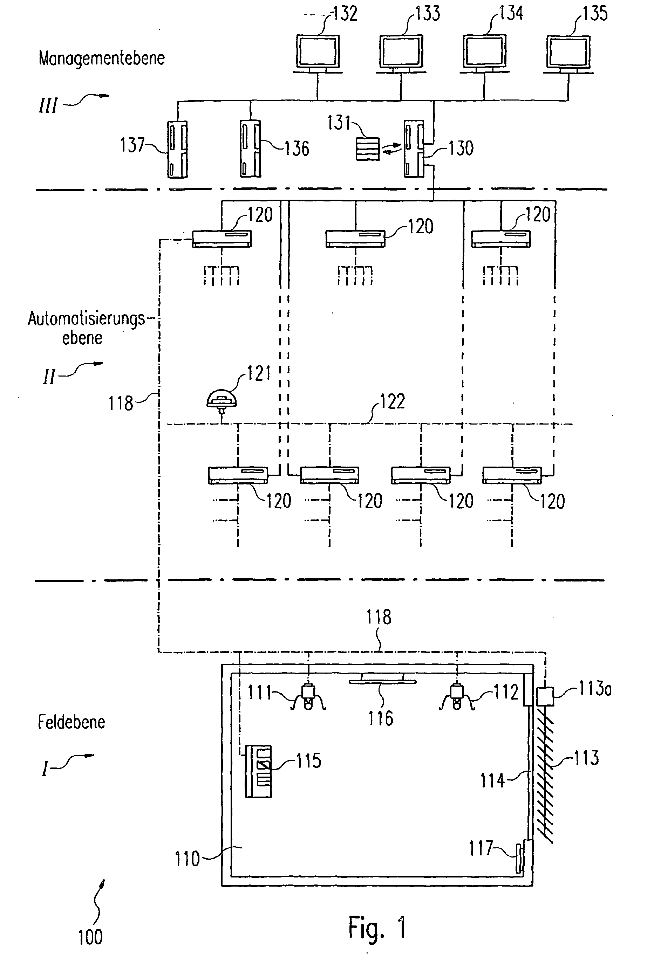

Bevor die Ausgestaltung und Funktionsweise erfindungsgemäß ausgestalteter Aktoren näher beschrieben wird, soll zunächst anhand von Fig. 1 kurz der Aufbau eines komplexeren Gebäudemanagementsystems erläutert werden. Fig. 1 zeigt dabei ein komplexeres Managementsystem, welches zur Steuerung einer Vielzahl von Aktoren innerhalb eines größeren Gebäudes vorgesehen ist.

Das in Fig. 1 dargestellte und allgemein mit dem Bezugszeichen 100 versehene Gebäudemanagementsystem lässt sich hierarchisch gesehen in drei Ebenen gliedern. Es handelt sich hierbei in aufsteigender Reihenfolge um die sog. Feldebene I, die Automatisierungsebene II sowie um die Managementebene III. Die drei Ebenen unterscheiden sich dabei hinsichtlich der darin befindlichen Geräte sowie ihrer Funktionsweise wie nachfolgend erläutert werden soll.

In der untersten sog. Feldebene I befinden sich zunächst primär die Aktoren und die Bedienelemente. Bei den Aktoren kann es sich bspw. um die innerhalb eines Raums 110 angeordneten Leuchten 111 bzw. 112 sowie ferner um eine über einen entsprechenden Motor 113a angesteuerte Jalousie 113 zur Abdunklung eines Fensters 114 des Raums 110 handeln. Die manuelle Steuerung dieser Aktoren 111 bis 113 erfolgt lokal über ein oder mehrere Bediengeräte 115, über welche von einem Benutzer manuell Steuerbefehle zum Ansteuern der in den Leuchten 110, 112 vorgesehenen Lichtquellen bzw. der Jalousie 113 vorgegeben werden können. Die Aktoren 111 bis 113 sind hierzu über eine gemeinsame Busleitung 118 mit dem Bediengerät 115 verbunden.

Zusätzlich könnte der Raum 110 auch lokal durch ein Klima-Steuermodul mittels eines Bediengeräts in seiner Temperatur geregelt werden, wozu in dem Raum zusätzlich auch noch Elemente zur Kühlung 116 sowie zur Heizung 117 vorgesehen sind. Auch diese beiden Elemente 116, 117 könnten in Erweiterung des Gebäudemanagementsystems zusätzlich an die Busleitung 118 angeschlossen und gemeinsam über das Bediengerät 115 angesteuert werden.

Eine andere Erweiterung des Systems innerhalb der Feldebene könnte ferner auch darin bestehen, innerhalb des Raums 110 Sensoren anzuordnen, die beispielsweise die Anwesenheit von Personen in dem Raum 110 feststellen und für diesen Fall die Leuchten 111 und 112 automatisch aktivieren. Auch eine Helligkeitsregelung unter Berücksichtigung des durch das Fenster 114 einfallenden Lichts könnte auf diese Weise erzielt werden. Entsprechende Sensoren wären dann wiederum über den Bus 118 mit den Aktoren 111 bis 113 verbunden.

Anzumerken ist ferner, dass das Gebäudemanagementsystem 100 selbstverständlich nicht nur einen einzigen Raum mit anzusteuernden Aktoren aufweist, sondern vielmehr eine Vielzahl derartiger Räume. Die Feldebene I kann somit nochmals in mehrere sogenannte Busbezirke unterteilt sein, wobei dann ein Busbezirk die kleinste logische Einheit innerhalb des Systems bildet. Innerhalb eines Busbezirks können sich Ein- und Ausgabegeräte eine gemeinsame Busleitung sowie eine gemeinsame Busversorgung teilen, wobei die Busleitung galvanisch die verschiedenen Komponenten miteinander verbindet. Im dargestellten Ausführungsbeispiel in Fig. 1 kann beispielsweise der Raum 110 als ein einzelner Busbezirk angesehen werden. Es wäre allerdings durchaus auch denkbar, einen Busbezirk auf mehrere Räume, bspw. auf ein Büro oder eine Wohnung innerhalb des Gebäudes auszuweiten.

Ein besonderes Merkmal des in Fig. 1 dargestellten Gebäudemanagementsystems 100 ist ferner, dass der in der Feldebene vorgesehene Bus 118 zum Verbinden des Eingabegeräts 115 mit den verschiedenen Aktoren 111 bis 113 ferner auch in die hierarchisch gesehen nächst-höhere Automatisierungsebene II führt und dort zumindest mit einem der in diese Ebene vorgesehen Rechner 120 verbunden ist. Wie der Darstellung in Fig. 1 entnommen werden kann, sind die zentralen Elemente dieser Automatisierungsebene II eine Vielzahl von Rechner 120, bei denen es sich um die sogenannten Tageslichtrechner handelt. Aufgabe dieser Tageslichtrechner 120 ist es, die verschiedenen Dienste der Tageslichtautomatik, der Zeitautomatik, der Jalousieautomatik oder auch die statistischen Überwachungen und die Wartungskontrollen durchzuführen. Unter dem Begriff "Dienst" können dabei allgemein sämtliche Funktionen des Gebäudemanagementsystems zur Ansteuerung bzw. zum Betreiben der Aktoren verstanden werden, welche über eine lokale manuelle Ansteuerung der Aktoren durch den Benutzer mittels der Bediengeräte hinausgehen. Bspw. stellt die Möglichkeit, die Leuchten eines Raums gemeinsam entsprechend einer gewünschten vorprogrammierten lichttechnischen Stimmung oder Situation anzusteuern, einen Dienst dar. Auch das zeitabhängige automatische Ein- und Ausschalten der Aktoren fällt allerdings hierunter.

Ein weiterer besonderer Dienst, der mit Hilfe der Automatisierungsebene realisiert werden kann, ist die tageslichtabhängige Ansteuerung der Aktoren, insbesondere der Lichtquellen und der Jalousien. Ein weiterer Bestandteil der Automatisierungsebene II ist dementsprechend ein Tageslichtmesskopf 121, der zur Erfassung der Intensität sowie der Richtungsabhängigkeit des Außenlichts vorgesehen ist. Die von diesem Tageslichtmesskopf 121 übermittelten Daten werden dann von den Tageslichtrechnern 120 verarbeitet und auf Basis dieser Informationen entsprechende Steuerbefehle zur Ansteuerung der Aktoren ausgegeben. Auch bei der Durchführung anderer Dienste werden Steuerinformationen von den Tageslichtrechnern 120 zu den Aktoren bzw. Rückinformationen in umgekehrter Richtung übermittelt. Dabei ist unter anderem auch vorgesehen, dass die Tageslichtrechner 120 untereinander kommunizieren, wobei dies allerdings nicht über den zur Ansteuerung der Aktoren vorgesehenen Bus 118 sondern über ein eigenes Bussystem 122 erfolgt.

Die höchste Hierarchieebene des Gebäudemanagementsystems 100 stellt schließlich die Managementebene III dar, in der schließlich die Verbindung zur allgemeinen Gebäudeleittechnik erfolgt. Als Schnittstelle hierfür ist ein eigener Rechner 130 vorgesehen, der einerseits mit den Tageslichtrechnern 120 der Automatisierungsebene II und andererseits mit den verschiedenen Komponenten der Managementebene I verbunden ist. Bestandteil des Schnittstellenrechners 130 ist ferner eine Datenbank 131, in der sämtliche wesentlichen Informationen hinsichtlich der verschiedenen Komponenten der Automatisierungsebene II sowie der Feldebene I enthalten sind.

Bestandteile der Managementebene III, welche untereinander über ein weiteres eigenes Bussystem 140 miteinander verbunden sind, sind mehrere Recheneinheiten 132 bis 135 zum allgemeinen Raum-, Jalousien- oder Zeitmanagement. Auch Programmserver 136 und Internet-/Intranet-Server 137 können in dieser dritten Ebene vorgesehen sein.

Insgesamt wird hierdurch also ein hierarchisch abgestuftes System geschaffen, welches die Möglichkeiten einer zentralen und automatisierten Ansteuerung der verschiedenen Aktoren in der Feldebene eröffnet. Gleichzeitig besteht allerdings für einen Benutzer auch die Möglichkeit, die innerhalb des entsprechenden Busbezirks befindlichen Aktoren manuell durch entsprechende Bediengeräte anzusteuern.

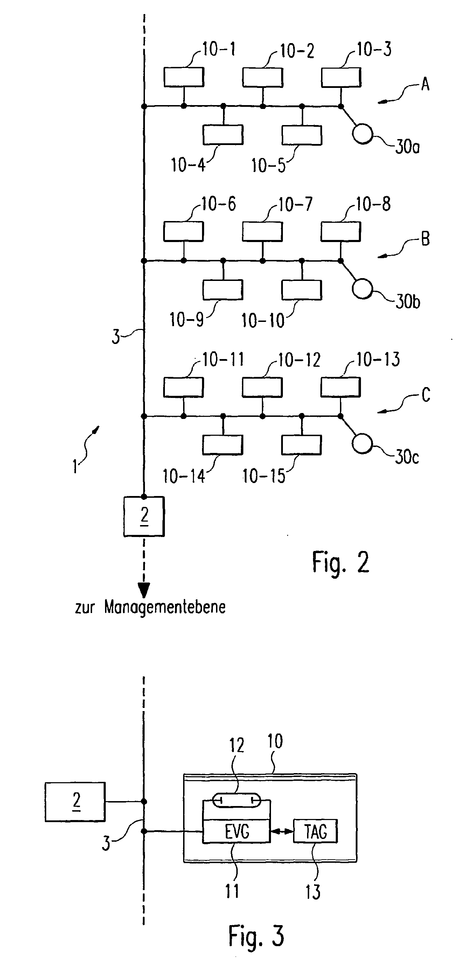

Fig. 2 zeigt nun schematisch ein mit dem Bezugszeichen 1 versehenes vereinfachtes Gebäudemanagementsystem, welches eine Steuereinheit 2 aufweist, die über ein Busleitungssystem 3 mit mehreren verteilt angeordneten Aktoren 10-1 bis 10-15 verbunden ist. Bei den Aktoren 10-1 bis 10-15 kann es sich bspw. um die zuvor erwähnten Elemente der Heizungs-, Lüftungs- und/oder Klimatechnik handeln. Auch andere sogenannte Gewerke wie bspw. Jalousien oder Leuchten können durch die zentrale Steuereinheit 2 angesteuert werden.

Bei dieser zentralen Steuereinheit 2 kann es sich bspw. um einen der zuvor beschriebenen Tageslichtrechner der Automatisierungsebene handeln, über welchen eine Ansteuerung der verschiedenen Aktoren 10-1 bis 10-5 entsprechend den verschiedenen Diensten erfolgt. Die Aktoren 10-1 bis 10-5 sind somit wiederum Bestandteil der zuvor beschriebenen Feldebene, während hingegen die zentrale Steuereinheit 2 bereits Bestandteil der hierarchisch höheren Automatisierungsebene ist und - wie durch die gestrichelte Linie angedeutet ist - mit weiteren Komponenten bspw. der Managementebene verbunden sein kann.

Allen Aktoren 10-1 bis 10-15 des Systems 1 ist gemeinsam, dass diese intern ein Steuergerät aufweisen, welches zumindest in der Lage ist, über die Datenleitungen des Busleitungssystems 3 Steuerbefehle zu empfangen und den zugehörigen Aktor 10-1 bis 10-15 in entsprechender Weise zu betreiben. Diese Steuerbefehle können beispielsweise manuell durch ein lokales Eingabegerät 30a, 30b, oder 30c erzeugt werden, insbesondere können sie allerdings auch von der zentralen Steuereinheit 2 übermittelt werden. Oftmals sind die Steuergeräte der Aktoren 10-1 bis 10-15 ferner auch in der Lage, Daten an die zentrale Steuereinheit 2 zu übermitteln und bspw.

Informationen hinsichtlich des aktuellen Betriebszustands oder etwaiger Fehlzustände zu übermitteln, wodurch die Möglichkeit einer zentralen Überwachung der Funktionsfähigkeit des Systems geschaffen wird.

Damit die Aktoren 10-1 bis 10-15 einzeln von der zentralen Steuereinheit 2 angesprochen werden können, ist ihnen jeweils eine spezifische Betriebsadresse zugewiesen, über welche sie kontaktiert werden. Ferner könnte ihnen ergänzend auch eine Gruppenadresse zugewiesen werden, um mehrere der Aktoren 10-1 bis 10-15 gleichzeitig anzusprechen. Beispielsweise könnte es sich bei den Aktoren 10-1 bis 10-5 bzw. 10-6 bis 10-10 bzw. 10-11 bis 10-15 der Bereiche A, B und C um Leuchten eines gemeinsamen Busbezirks handeln, die sich jeweils in verschiedenen Räumen befinden, so dass durch die Ansteuerung einer bestimmte Gruppe die Helligkeit in dem entsprechenden Raum kollektiv verändert werden kann. Es wäre allerdings auch denkbar, dass die Aktoren in den drei Bereichen A, B und C jeweils einen eigenen Busbezirk definieren.

Die Informationen über die Betriebsadresse sowie über eine evtl. Gruppenadresse müssen spätestens bei der Inbetriebnahme des Systems in die Aktoren 10-1 bis 10-15 einprogrammiert werden. Bislang war es bekannt, diese Informationen unmittelbar in das entsprechende Steuergerät des Aktors 10-1 bis 10-15, im Falle einer Leuchte also bspw. in das elektronische Vorschaltgerät einzuprogrammieren, welches hierfür ein geeignetes Speicherelement aufwies. Für den Fall, dass nun das Vorschaltgerät aufgrund eines Defekts ausgetauscht werden musste, wurde eine Neuprogrammierung erforderlich, da mit Entnahme des alten defekten Vorschaltgeräts auch die betriebsspezifischen Informationen verloren gingen.

Um den oben genannten Nachteil zu umgehen, wird nunmehr erfindungsgemäß vorgeschlagen, die Aktoren 10-1 bis 10-15 derart auszugestalten, dass bei einem Wechsel des Steuergeräts die Informationen in dem Aktor 10-1 bis 10-15 verbleiben. Eine Möglichkeit zur Realisierung dieser Lösung soll nunmehr anhand von Fig. 3 näher erläutert werden.

Fig. 3 zeigt in vergrößerter Darstellung die erfindungsgemäße Ausgestaltung eines allgemein mit dem Bezugszeichen 10 versehenen Aktors anhand des Ausführungsbeispiels einer Leuchte. Zentrales Element der Leuchte 10 ist ein Steuergerät in Form eines elektronischen Vorschaltgeräts 11, welches mit Hilfe einer nicht näher dargestellten Schnittstelle über die Leitungen des Bussystems 3 mit der zentralen Steuereinheit verbunden und in der Lage ist, Befehle von der zentralen Steuereinheit 2 zu empfangen sowie ggf. Informationen hinsichtlich des Betriebszustands der Leuchte 10 an die Steuereinheit 2 zurückzumelden. Das Vorschaltgerät 11 steuert eine Lampe 12 an, bei der es sich bspw. um eine Gasentladungslampe handelt.

Informationen hinsichtlich des Lampentyps können nunmehr in einem von dem Vorschaltgerät 11 getrennten und als TAG bezeichneten Speicherteil 13 enthalten sein, welches durch das Vorschaltgerät 11 ausgelesen werden kann. Die in dem Speicherteil 13 enthaltenen Informationen geben dabei nicht nur über den verwendeten Lampentyp Auskunft sondern können darüber hinaus auch Informationen hinsichtlich der oben erwähnten Betriebs- und/oder Gruppenadresse der Leuchte 10 sowie anderer betriebsspezifischer Parameter enthalten, welche für die Funktion der Leuchte 10 in dem Gesamtsystem von Bedeutung sind. Wesentlich hierbei ist, dass die leuchtenspezifischen Informationen und Betriebsparameter getrennt von dem als Steuergerät dienenden Vorschaltgerät 11 in dem Speicherteil 13 gespeichert sind, welches im dargestellten Ausführungsbeispiel fest in die Leuchte 10 integriert ist. Bei einem Wechsel des Vorschaltgeräts 11 verbleiben somit die Informationen in der Leuchte 10, so dass diese ohne eine aufwendige Neuprogrammierung des Geräts bei einem Ersatz des Vorschaltgeräts 11 zur Verfügung stehen. Die Informationen in dem Speicher 13 können dann von dem neuen Vorschaltgerät 11 sofort ausgelesen werden, so dass dieses unmittelbar in die Lage versetzt wird, die Leuchte 10 in der ursprünglich gewünschten Weise zu betreiben. Ferner könnte das Speicherteil 13 auch derart ausgebildet sein, dass es durch das Vorschaltgerät 11 beschreibbar ist, so dass Betriebsdaten von dem Vorschaltgerät 11 in das Speicherteil kopiert und dort sicher aufbewahrt werden können.

Das Vorschaltgerät 11 kann bei Bedarf alle in dem Speicherteil 13 enthaltenen Informationen an die zentrale Steuereinheit 2 weiterleiten. Alternativ dazu könnte sogar vorgesehen sein, dass die Steuereinheit 2 in der Lage ist, spezifische Informationen unmittelbar in das Speicherteil 13 zu speichern bzw. aus diesem auszulesen, ohne hierfür den Umweg über das Vorschaltgerät 11 nehmen zu müssen.

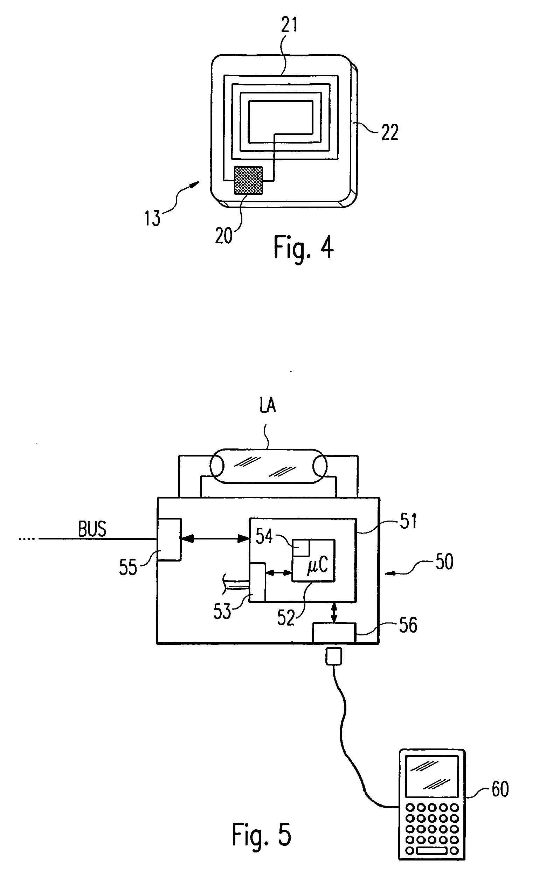

Für die Realisierung des Speicherelements 13 sind verschiedene Möglichkeiten denkbar. Vorzugsweise wird allerdings ein sog. passives RFID-Etikett verwendet, welches drahtlos durch das Vorschaltgerät 11 ausgelesen werden kann. Derartige RFID-Elemente, die oftmals auch als "Smart Labels" bezeichnet werden, finden als passive Speicher in letzter Zeit zunehmend Verwendung. Wie die schematische Darstellung in Fig. 4 zeigt, besteht ein derartiges RFID-TAG bzw. ein derartiger RFID-Transponder im wesentlichen aus einem elektronischen Speicher in Form eines Mikrochips 20, der gemeinsam mit einer als Antenne dienenden Spule 21 in einem Gehäuse 22 angeordnet ist.

Die Antenne 21 dient dabei nicht nur dem Datenempfang sowie der Datenübermittlung sondern entnimmt auch dem von einem entsprechenden Schreib-/Lesegerät - welches Bestandteil des Steuergeräts ist bzw. mit diesem verbunden ist - ausgehenden elektromagnetischen Feld die zur Stromversorgung des Mikrochips 20 erforderliche Energie. Dies bringt den Vorteil mit sich, dass RFID-Elemente keine eigene Stromversorgung benötigen und aufgrund des passiven Aufbaus nur während des Datentransfers - und aufgrund der extrem geringen Sendeleistung - lediglich in der unmittelbaren Umgebung Funksignale entstehen. Da die als Antenne dienende Spule 21 ferner in der Regel als Flachspule ausgebildet ist, können RFID-Elemente in extrem dünner Ausführung hergestellt werden und ermöglichen aufgrund ihrer Robustheit wartungsfrei eine passive Datenerhaltung ohne Datenverlust über einen Zeitraum von mindestens zehn Jahren hinweg.

Der Vorteil der Verwendung eines derartigen RFID-Elements 13 als Speicherteil besteht darin, dass dieses wie ein normales Kunststoff- oder Papieretikett verarbeitet werden kann und keinen zusätzlichen Raum in der Leuchte 10 beansprucht. Ferner kann das RFID-Element 13 während der gesamten Logistik-Kette, also während der Fertigung, der Lagerung, der Transportlogistik und dem Baustellenmanagement zur eindeutigen Identifizierung der Leuchte verwendet werden wobei die in dem RFID.-Element 13 gespeicherten Daten auch später von dem Gebäudemanagementsystem während der gesamten Lebensdauer der Leuchte zu Inventurzwecken genutzt werden können.

Ein weiterer Vorteil der Verwendung des Speicherteils 13 ergibt sich daraus, dass die Zahl der benötigten Varianten von Vorschaltgeräten reduziert werden kann, da das Vorschaltgerät 11 auf leuchtenspezifische Parameter in dem Speicherteil 13 zurückgreifen und somit die zugehörige Lampe 12 in geeigneter Weise ansteuern kann. In diesem Sinne wäre auch denkbar, das System derart auszugestalten, dass anhand einer in dem RFID-TAG 13 abgelegten Leuchtenartikelnummer leuchtenspezifische Daten aus einer Datenbank abgerufen werden können, welche dann die grundlegenden Bedingungen bzw. Parameter des Leuchtenbetriebs vorgeben. Eine fehleranfällige manuelle Einstellung des Leuchtentyps würde somit entfallen.

In dem Speicherteil 13 kann ferner eine - unveränderliche - Unikatnummer eingespeichert sein, welche durch das Steuerungssystem genutzt werden kann, um die zugehörige Leuchte eindeutig zu identifizieren und individuell anzusteuern. Diese Unikatnummer könnte insbesondere auch während der späteren Adressierung der Leuchte im Rahmen des sog. DALI-Standards genutzt werden. Enthält die Leuchte mehrere Vorschaltgeräte, kann die Unikatnummer ferner auch als Gruppennummer dienen, um alle Vorschaltgeräte diese Leuchte einheitlich anzusteuern.

Zur Veränderung der in dem Speicherteil 13 enthaltenen Informationen kann zunächst des Vorschaltgerät 11 selbst verwendet werden, welches mit Hilfe seines Schreib-/Lesegeräts in der Lage ist, Daten in des Speicherteil 13 einzuschreiben. Auch eine direkte Programmierung des RFID-TAGs 13 durch die zentrale Steuereinheit 2 wäre auf diese Weise denkbar. Ergänzend hierzu könnte allerdings auch vorgesehen sein, dass mit Hilfe eines transportablen Schreib-/Lesegeräts die Informationen des Speicherteils 13 gelesen und verändert werden. Auf diese Weise kann somit auch zu einem späteren Zeitpunkt noch eine Umprogrammierung der Leuchte erfolgen, was bspw. dann erforderlich ist, wenn der Lampentyp gewechselt wird oder die Leuchte an einer anderen Stelle des Beleuchtungssystems angeordnet wird und dementsprechend die Betriebs- und/oder Gruppenadresse verändert werden muss.

Bei den bislang beschriebenen Varianten war vorgesehen, dass das Speicherteil 13 - also beispielsweise das RFID-TAG - getrennt von dem Steuergerät 11 fest in dem Aktor 10 angeordnet war. Eine Neuprogrammierung der Leuchte 10 könnte allerdings zusätzlich dadurch vereinfacht werden, dass auch das Speicherteil 13 selbst auswechselbar ausgestaltet ist. Beispielsweise könnte das Speicherteil 13 in Form einer sog. SIM-Karte realisiert werden, welche in einfacher Weise von Hand in einen entsprechenden Steckplatz der Leuchte 10 bzw. des Vorschaltgeräts 11 eingesetzt werden kann. Wesentlich hierbei ist, dass das Speicherteil 13 unabhängig von dem Vorschaltgerät 11 gewechselt werden kann und dass insbesondere wiederum die Möglichkeit besteht, das Vorschaltgerät 11 auszuwechseln, ohne hierbei einen Verlust der in dem Speicherelement 13 befindlichen Daten befürchten zu müssen.

Die zusätzliche Auswechselbarkeit des Speicherelements bringt allerdings noch weitere Vorteile in der Handhabung sowie bei der Inbetriebnahme des Systems mit sich, die nachfolgend erläutert werden sollen.

So könnte bspw. eine Erst-Programmierung des Speicherelements bereits werksseitig erfolgen, wobei durch den Hersteller alle funktionsrelevanten Daten des Aktors in das Speicherteil eingeschrieben werden. Soll nun ein Gebäudemanagementsystem neu installiert werden, so können zunächst die zugehörigen Geräte und Aktoren in geeigneter Weise in dem Gebäude angeordnet und installiert werden, wobei dann die eigentliche Inbetriebnahme des Systems in einfacher Weise dadurch erfolgt, dass die Speicherteile in die Aktoren eingesetzt werden. Der personelle und finanzielle Aufwand im Vergleich zu einer lokalen Programmierung jedes einzelnen Geräts ist hierbei deutlich reduziert, da das Einsetzen der Speicherteile in die entsprechenden Steckplätze auch durch ein weniger qualifiziertes Wartungspersonal vorgenommen werden kann.

Ein zusätzlicher Aspekt des wechselbaren Speicherteils besteht auch darin, dass dieses dazu genutzt werden kann, bestimmte Betriebsfunktionen des Aktors freizuschalten. So kann bspw. vorgesehen sein, dass der Aktor bzw. das zugehörige Steuergerät grundsätzlich in der Lage ist, den Aktor in unterschiedlichen Betriebszuständen bzw. gemäß unterschiedlichen Funktionen zu betreiben. Diese Funktionen werden für einen Benutzer allerdings erst dann verfügbar, wenn er entsprechende Lizenzgebühren hierfür zahlt. Sofern er dies wünscht, kann durch den Einsatz einer entsprechend programmierten Speicherkarte - oder durch die Umprogrammierung des RFID-TAGs - dem Gerät mitgeteilt werden, dass die ausgewählten Funktionen freigeschaltet sind und dementsprechend der Aktor in der entsprechenden Weise reagieren kann. Andernfalls könnte lediglich ein Betrieb im Rahmen einer Basisfunktion ermöglicht werden, in dem beispielsweise eine Leuchte ausschließlich ein- und ausgeschaltet werden kann.

Ferner gewährleistet das von dem Aktor getrennte Speicherteil auch ein erhöhte Datensicherheit, da - sofern das Steuergerät einen eigenen Speicher aufweist - die relevanten Daten sowohl in dem Steuergerät als auch in dem Speicherteil abgelegt werden können, so dass das Steuergerät während des normalen Betriebs auf die intern abgelegten Informationen zurückgreifen kann, allerdings bei einem eventuellen Datenverlust eine schnelle Datenrestaurierung unmittelbar in dem Aktor erfolgen kann.

Eine weitere Anwendungsmöglichkeit für das Speicherteil besteht schließlich auch darin, dieses zur permanenten oder regelmäßigen Aufzeichnung aktueller Betriebszustände des Aktors bzw. bestimmter Ereignisse zu verwenden. So wäre es bspw. denkbar, dass das Steuergerät selbständig in bestimmten zeitlichen Abständen wiederholt aktuelle Informationen über den Betriebszustand des Aktors, wie z.B. Störmeldungen hinsichtlich einer Überspannung, Übertemperatur, Überlast etc. in das Speicherteil einschreibt, so dass bei einem Ausfall des Gerätes für das Wartungspersonal auf einfache Weise die Ursache für den Fehlzustand erkennbar ist. Neben diesen allgemeineren Betriebsinformationen wäre für den Fall, dass es sich bei dem Aktor bzw. das Steuergerät um ein elektronisches Vorschaltgerät zum Betreiben einer Gasentladungslampe handelt, insbesondere auch das Speichern von Informationen hinsichtlich des Datums der ersten Inbetriebnahme, der Betriebsdauer, der Art und Anzahl der aufgetretenen Fehlerfälle (z.B. Überspannung, Gasdefekt, Ende der zulässigen Betriebsdauer, Wendelfehler), der minimalen und maximalen Temperatur sowie der Anzahl der Schaltvorgänge sinnvoll.

Wesentlich hierbei ist, dass das Protokollieren bzw. Speichern dieser Informationen selbständig durch das Gerät durchgeführt wird. Dabei kann das Protokollieren nach einem vorgegebenen Zeitschema erfolgen, wobei zu bestimmten Zeitpunkten Informationen über den aktuellen Betrieb aufgezeichnet werden. Entsprechende Bezugszeitpunkte hierfür könnten dabei durchaus auch durch die Zentraleinrichtung des Systems vorgegeben werden. Alternativ oder ergänzend hierzu könnte das Speichern der Betriebsinformationen allerdings auch ereignisgesteuert erfolgen. Bei Eintreten eines bestimmten Ereignisses, zum Beispiel dem Auftreten eines Störfalls oder auch einfach dem Ein- oder Ausschalten der Lichtquelle wird dann eine entsprechende Informationen hierüber in dem Speicher abgelegt, so dass ein vollständiges Protokoll über den Betrieb des Geräts im Laufe der Zeit erstellt wird.

Durch diese Nutzung des Speicherteils als "Fahrtenschreiber" erstellt also der Aktor selbständig ein vollständiges Protokoll über dessen Nutzung, wobei die hierbei erstellten Informationen dann für Service-Zwecke ausgelesen und ausgewertet werden können. Selbstverständlich würde diese Möglichkeit auch bei fest in dem Aktor installierten Speicherteilen bestehen.

Die Erfassung der Betriebsdaten erfolgt vorzugsweise über einen Mikroprozessor, der Bestandteil einer internen Steuerschaltung des Steuergeräts ist. Fig. 5 zeigt hierzu eine Variante eines erfindungsgemäß ausgestalteten Steuergeräts in Form eines elektronischen Vorschaltgeräts 50, welches eine Steuerschaltung 51 aufweist, die für den Betrieb der Lichtquelle LA verantwortlich ist und hierzu die weiteren (nicht weiter dargestellten) Komponenten des Vorschaltgeräts 50 überwacht und ansteuert. Der innerhalb der Steuerschaltung 51 befindliche Mikroprozessor µC 52 ist mit einem geeigneten Analog-Interface 53 verbunden, welches zum Erfassen der Betriebsdaten genutzt wird. Innerhalb des Mikroprozessors 52 befindet sich ein Flash-Speicher 54 oder ein EPROM, in dem die angesammelten Betriebsdaten abgelegt werden. Während des Betriebs des Vorschaltgeräts 50 zeichnet dann der Mikroprozessor 52 regelmäßig Informationen hinsichtlich des aktuellen Betriebs auf, ferner werden auch bestimmte Betriebsereignisse wie bspw. das Einschalten oder Zünden der Gasentladungslampe LA und dergleichen protokolliert, um feststellen zu können, wie häufig die Lampe LA eingeschaltet bzw. wie lange sie betrieben wurde. Neben Informationen hinsichtlich des Betriebs des Vorschaltgeräts 50 selbst können somit auch Informationen hinsichtlich der Nutzung der Gasentladungslampe LA erfasst werden.

Um nun nähere Informationen hinsichtlich der Nutzung des Vorschaltgeräts 50 in Erfahrung zu bringen, können die in dem Speicher abgelegten Informationen ausgelesen werden. Eine erste Möglichkeit hierzu wäre, eine in dem Vorschaltgerät 50 angeordnete Schnittstelle 55 zu nutzen, über welche dieses mit dem allgemeinen Bussystem verbunden ist. Handelt es sich bspw. um ein Bussystem gemäß dem DALI-Standard, so könnte die in dem Vorschaltgerät 50 ohnehin bereits vorhandene DALI-Schnittstelle 55 genutzt werden.

Eine alternative Möglichkeit hierzu wäre allerdings auch, eine separate - bspw. serielle - Schnittstelle 56 einzusetzen, an welche gezielt ein Gerät 110 zum Auslesen der protokollierten Betriebsdaten angeschlossen werden kann. Bspw. wäre es dann denkbar, dass das Wartungspersonal ein entsprechendes Lesegerät 60 an das Vorschaltgerät 50 anschließt, um die Daten auszulesen. Auch eine drahtlose Übermittlung der aufgezeichneten Daten wäre denkbar, wobei dann eine entsprechende Sende- und Empfangseinrichtung in dem Vorschaltgerät 50 vorgesehen sein müsste. Die beiden zuletzt genannten Varianten sind insbesondere dann sinnvoll, wenn z.B. das Vorschaltgerät 50 nach Ausfällen des DALI-Interfaces analysiert werden soll, um die Ursache für den Fehler herauszufinden. Das Auslesen der Daten kann im Prinzip in jedem Betriebszustand (bspw. während des Vorheizens, während des Normalbetriebs oder während eines Stand-by-Betriebs) erfolgen, ohne dass hierbei die Funktionalität des Geräts beeinflusst wird.

Sollte das Auslesen der Daten über das DALI-Interface 55 erfolgen, können hierzu übliche DALI-Controller, die an das Bussystem angeschlossen sind, eingesetzt werden. In diesem Fall wäre es möglich, die verteilt angeordneten Vorschaltgeräte über einen Autorisierungscode für die Betriebsdaten-Abfrage freizuschalten.

Durch das regelmäßige Aufzeichnen der Betriebsdaten wird also nicht nur die Wartung des Geräts vereinfacht, sondern es besteht darüber hinaus auch die Möglichkeit, festzustellen, welches die Ursache für einen evtl. aufgetretenen Fehler war bzw. wer für den Fehler verantwortlich ist und dementsprechend die Kosten für die Wartungsarbeiten zu tragen hat. Insbesondere das Auffinden der Ursache für den Fehler wird durch die erfindungsgemäße Maßnahme deutlich vereinfacht, da anhand der zur Verfügung gestellten Informationen evtl. Fehlzustände in einfacher Weise erkannt werden können.

Darauf hinzuweisen ist, dass das selbständige Aufzeichnen von Betriebsdaten durch den Aktor bzw. das Vorschaltgerät auch dann sinnvoll ist, wenn es sich um ein Stand alone-Gerät handelt, welches also selbständig arbeitet und nicht an ein größeres Gebäudemanagementsystem angeschlossen ist. Auch bei derartigen unabhängig arbeitenden elektronischen Vorschaltgeräten bzw. allgemein Lampenbetriebsgeräten können durch das regelmäßig Aufzeichnen der Betriebsdaten die Möglichkeiten zur Wartung des Geräts verbessert werden. Das Abspeichern der Betriebsdaten kann dabei sowohl in einem auswechselbaren Speicherteil als auch einem fest in dem Gerät angeordneten Speicher erfolgen.

Insgesamt gesehen wird somit durch die vorliegende Erfindung die Möglichkeit geschaffen, Steuergeräte eines Aktors in einfacher Weise auszutauschen, ohne hierbei einen Verlust der betriebsspezifischen Daten befürchten zu müssen. Hierdurch wird nicht nur die Wartung des Geräts vereinfacht sondern gleichzeitig auch die Möglichkeit geschaffen, den Funktionsumfang der Aktoren in komfortabler Weise zu verändern oder wahlweise nutzbar zu machen. Ferner werden durch das selbständige Protokollieren von Betriebsdaten die Möglichkeit zur Wartung der Geräte sowie zur Fehlerdiagnose entscheidend verbessert.

## Patentansprüche

1. Gebäudemanagementsystem (1) zur Steuerung verteilt angeordneter Aktoren (10), mit einer zentralen Steuereinheit (2) sowie mindestens einem von der zentralen Steuereinheit (2) angesteuerten Aktor (10),
wobei der Aktor (10)
• ein Steuergerät (11), welches dazu ausgebildet ist, Steuerbefehle von der zentralen Steuereinheit (2) zu empfangen und den Aktor (10) in Abhängigkeit von diesen Steuerbefehlen zu betreiben, sowie
• ein Speicherteil (13) zum Speichern von funktionsrelevanten Informationen aufweist,
und wobei das Speicherteil (13) von dem Steuergerät (11) getrennt oder trennbar ist,
**dadurch gekennzeichnet,**
**dass** das Speicherteil (13) durch ein wechselbares Speicherelement gebildet ist und
**dass** der Aktor (10) oder das Steuergerät (11) einen Steckplatz für das wechselbare Speicherelement aufweist.

2. Gebäudemanagementsystem nach einem der vorherigen Ansprüche,
**dadurch gekennzeichnet,**
**dass** das Speicherteil (13) durch das Steuergerät (11) ausschließlich lesbar ist.

3. Gebäudemanagementsystem nach Anspruch 1 oder 2,
**dadurch gekennzeichnet,**
**dass** das Speicherteil (13) durch das Steuergerät (11) sowohl lesbar als auch beschreibbar ist.

4. Gebäudemanagementsystem nach Anspruch 2 oder 3,
**dadurch gekennzeichnet,**
**dass** das Steuergerät (11) ein Lesegerät bzw. ein Schreib-/Lesegerät aufweist oder mit einem derartigen Gerät verbunden ist.

5. Gebäudemanagementsystem nach Anspruch 3 und 4,
**dadurch gekennzeichnet,**
**dass** das Steuergerät (11) dazu ausgebildet ist, selbständig Betriebsdaten des Aktors (10) zu erfassen bzw. aufzuzeichnen und in dem Speicherteil (13) abzulegen.

6. Gebäudemanagementsystem nach Anspruch 5,
**dadurch gekennzeichnet,**
**dass** das Aufzeichnen der Betriebsdaten regelmäßig erfolgt.

7. Gebäudemanagementsystem nach Anspruch 5 oder 6,
**dadurch gekennzeichnet,**
**dass** das Aufzeichnen der Betriebsdaten in Abhängigkeit bestimmter Betriebsereignisse erfolgt.

8. Gebäudemanagementsystem nach einem der Ansprüche 2 bis 7,
**dadurch gekennzeichnet,**
**dass** die Datenübermittlung zwischen dem Speicherteil (13) und dem Steuergerät (11) drahtlos erfolgt.

9. Gebäudemanagementsystem nach Anspruch 8,
**dadurch gekennzeichnet,**
**dass** das Speicherteil (13) durch ein RFID-Element gebildet ist.

10. Gebäudemanagementsystem nach einem der Ansprüche 1 bis 8,
**dadurch gekennzeichnet,**
**dass** das Speicherteil (13) durch eine SIM-Karte gebildet ist.

11. Gebäudemanagementsystem nach einem der vorherigen Ansprüche,
**dadurch gekennzeichnet,**
**dass** das Speicherteil (13) durch die zentrale Steuereinheit (2) lesbar und/oder beschreibbar ist.

12. Gebäudemanagementsystem nach einem der vorherigen Ansprüche,
**dadurch gekennzeichnet,**
**dass** es sich bei dem Aktor um eine Leuchte (10) eines Beleuchtungssystems handelt.

13. Gebäudemanagementsystem nach Anspruch 12,
**dadurch gekennzeichnet,**
**dass** das Steuergerät durch ein elektronisches Vorschaltgerät (11) zum Betreiben einer Lampe, insbesondere einer Gasentladungslampe (LA) gebildet ist.

14. Gebäudemanagementsystem (1) zur Steuerung verteilt angeordneter Aktoren (10), mit einer zentralen Steuereinheit (2) sowie mindestens einem von der zentralen Steuereinheit (2) angesteuerten Aktor (10),
wobei der Aktor (10)
• ein Steuergerät (11), welches dazu ausgebildet ist, Steuerbefehle von der zentralen Steuereinheit (2) zu empfangen und den Aktor (10) in Abhängigkeit von diesen Steuerbefehlen zu betreiben, sowie
• ein Speicherteil (13) zum Speichern von funktionsrelevanten Informationen aufweist,
und wobei das Speicherteil (13) von dem Steuergerät (11) getrennt oder trennbar ist,
**dadurch gekennzeichnet,**
**dass** die Datenübermittlung zwischen dem Speicherteil (13) und dem Steuergerät (11) drahtlos erfolgt und das Speicherteil (13) durch ein RFID-Element gebildet ist.

15. Aktor (10) zur Verwendung in einem Gebäudemanagementsystem (1), wobei der Aktor (10)
• ein Steuergerät (11), welches dazu ausgebildet ist, Steuerbefehle von einer zentralen Steuereinheit (2) des Gebäudemanagementsystems (1) zu empfangen und den Aktor (10) in Abhängigkeit von diesen Steuerbefehlen zu betreiben, sowie
• ein Speicherteil (13) zum Speichern von funktionsrelevanten Informationen aufweist,
und wobei das Speicherteil (13) von dem Steuergerät (11) getrennt oder trennbar ist,
**dadurch gekennzeichnet,**
**dass** das Speicherteil (13) durch ein wechselbares Speicherelement gebildet ist und
**dass** der Aktor (10) oder das Steuergerät (11) einen Steckplatz für das wechselbare Speicherelement aufweist.

16. Aktor nach Anspruch 15,
**dadurch gekennzeichnet,**
**dass** das Speicherteil (13) durch das Steuergerät (11) ausschließlich lesbar ist.

17. Aktor nach Anspruch 15 oder 16,
**dadurch gekennzeichnet,**
**dass** das Speicherteil (13) durch das Steuergerät (11) sowohl lesbar als auch beschreibbar ist.

18. Aktor nach Anspruch 16 oder 17,
**dadurch gekennzeichnet,**
**dass** das Steuergerät (11) ein Lesegerät bzw. ein Schreib-/Lesegerät aufweist oder mit einem derartigen Gerät verbunden ist.

19. Aktor nach Anspruch 17 und Anspruch 18,
**dadurch gekennzeichnet,**
**dass** das Steuergerät (11) dazu ausgebildet ist, selbständig Betriebsdaten des Aktors zu erfassen bzw. aufzuzeichnen und in dem Speicherteil (13) abzulegen.

20. Aktor nach Anspruch 19,
**dadurch gekennzeichnet,**
**dass** das Aufzeichnen der Betriebsdaten regelmäßig erfolgt.

21. Aktor nach Anspruch 19 oder 20,
**dadurch gekennzeichnet,**
**dass** das Aufzeichnen der Betriebsdaten in Abhängigkeit bestimmter Betriebsereignisse erfolgt.

22. Aktor nach einem der Ansprüche 15 bis 21,
**dadurch gekennzeichnet,**
**dass** die Datenübermittlung zwischen dem Speicherteil (13) und dem Steuergerät (11) drahtlos erfolgt.

23. Aktor nach Anspruch 22,
**dadurch gekennzeichnet,**
**dass** das Speicherteil (13) durch ein RFID-Element gebildet ist.

24. Aktor nach einem der Ansprüche 15 bis 21,
**dadurch gekennzeichnet,**
**dass** das Speicherteil (13) durch eine SIM-Karte gebildet ist.

25. Aktor nach einem der Ansprüche 15 bis 24,
**dadurch gekennzeichnet,**
**dass** es sich um eine Leuchte (10) handelt.

26. Aktor nach Anspruch 25,
**dadurch gekennzeichnet,**
**dass** das Steuergerät durch ein elektronisches Vorschaltgerät (11) zum Betreiben einer Lampe, insbesondere einer Gasentladungslampe (LA) gebildet ist.

27. Aktor (10) zur Verwendung in einem Gebäudemanagementsystem (1), wobei der Aktor (10)
• ein Steuergerät (11), welches dazu ausgebildet ist, Steuerbefehle von einer zentralen Steuereinheit (2) des Gebäudemanagementsystems (1) zu empfangen und den Aktor (10) in Abhängigkeit von diesen Steuerbefehlen zu betreiben, sowie
• ein Speicherteil (13) zum Speichern von funktionsrelevanten Informationen aufweist,
und wobei das Speicherteil (13) von dem Steuergerät (11) getrennt oder trennbar ist,
**dadurch gekennzeichnet,**
**dass** die Datenübermittlung zwischen dem Speicherteil (13) und dem Steuergerät (11) drahtlos erfolgt und das Speicherteil (13) durch ein RFID-Element gebildet ist.

## Claims

1. A building management system (1) for the control of actuators (10) arranged in a distributed manner, having a central control unit (2) and at least one actuator (10) controlled by the central control unit (2),
wherein the actuator (10) has
• a control device (11) which is formed to receive control commands from the central control unit (2) and to operate the actuator (10) in dependence upon these control commands, and
• a memory part (13) for storing function-relevant information,
and wherein the memory part (13) is separate or separable from the control device (11),
**characterized in that**
the memory part (13) is constituted by an exchangeable memory element and
**in that** the actuator (10) or the control device (11) has an insertion location for the exchangeable memory element.

2. A building management system according to any preceding claim,
**characterized in that**
the memory part (13) can only be read by the control device (11).

3. A building management system according to claim 1 or 2,
**characterized in that**
the memory part (13) can both be read and also written by the control device (11).

4. A building management system according to claim 2 or 3,
**characterized in that**
the control device (11) has a reading device or a write/read device, or is connected with such a device.

5. A building management system according to claim 3 and 4,
**characterized in that**
the control device (11) is constituted to independently detect or record operating data of the actuator (10) and to store the data in the memory part (13).

6. A building management system according to claim 5,
**characterized in that**
the recording of the operating data is effected regularly.

7. A building management system according to claim 5 or 6,
**characterized in that**
the recording of the operating data is effected in dependence upon certain operational events.

8. A building management system according to any of claims 2 to 7,
**characterized in that**
the data transfer between the memory part (13) and the control device (11) is effected in a wireless manner.

9. A building management system according to claim 8,
**characterized in that**
the memory part (13) is formed by a RFID element.

10. A building management system according to any of claims 1 to 8,
**characterized in that**
the memory part (13) is formed by a SIM card.

11. A building management system according to any preceding claim,
**characterized in that**
the memory part (13) is readable and/or writeable by the central control unit (2).

12. A building management system according to any preceding claim,
**characterized in that**
the actuator is a luminaire (10) of an illumination system.

13. A building management system according to claim 12,
**characterized in that**
the control device is formed by an electronic ballast (11) for operating a lamp, in particular a gas-discharge lamp (LA).

14. A building management system (1) for the control of actuators (10) arranged in a distributed manner, having a central control unit (2) and at least one actuator (10) controlled by the central control unit (2),
wherein the actuator (10) has
• a control device (11) which is formed to receive control commands from the central control unit (2) and to operate the actuator (10) in dependence upon these control commands, and
• a memory part (13) for storing function-relevant information,
and wherein the memory part (13) is separate or separable from the control device (11),
**characterized in that**
the data transfer between the memory part (13) and the control device (11) is effected in a wireless manner and the memory part (13) is formed by a RFID element.

15. An actuator (10) for use in a building management system (1), wherein the actuator (10) has
• a control device (11) which is formed to receive control commands from a central control unit (2) of the building management system (1) and to operate the actuator (10) in dependence upon these control commands, and
• a memory part (13) for storing function-relevant information,
and wherein the memory part (13) is separate or separable from the control device (11),
**characterized in that**
the memory part (13) is constituted by an exchangeable memory element and
**in that** the actuator (10) or the control device (11) has an insertion location for the exchangeable memory element.

16. An actuator according to claim 15,
**characterized in that**
the memory part (13) can only be read by the control device (11).

17. An actuator according to claim 15 or 16,
**characterized in that**
the memory part (13) can both be read and also written by the control device (11).

18. An actuator according to claim 16 or 17,
**characterized in that**
the control device (11) has a reading device or a write/read device, or is connected with such a device.

19. An actuator according to claim 17 and claim 18,
**characterized in that**
the control device (11) is constituted to independently detect or record operating data of the actuator and to store the data in the memory part (13).

20. An actuator according to claim 19,
**characterized in that**
the recording of the operating data is effected regularly.

21. An actuator according to claim 19 or 20,
**characterized in that**
the recording of the operating data is effected in dependence upon certain operational events.

22. An actuator according to any of claims 15 to 21,
**characterized in that**
the data transfer between the memory part (13) and the control device (11) is effected in a wireless manner.

23. An actuator according to claim 22,
**characterized in that**
the memory part (13) is formed by a RFID element.

24. An actuator according to any of claims 15 to 21,
**characterized in that**
the memory part (13) is formed by a SIM card.

25. An actuator according to any of claims 15 to 24,
**characterized in that**
it is a luminaire (10).

26. An actuator according to claim 25,
**characterized in that**
the control device is formed by an electronic ballast (11) for operating a lamp, in particular a gas discharge lamp (LA).

27. An actuator (10) for use in a building management system (1),
wherein the actuator (10) has
• a control device (11) which is formed to receive control commands from a central control unit (2) of the building management system (1) and to operate the actuator (10) in dependence upon these control commands, and
• a memory part (13) for storing function-relevant information,
and wherein the memory part (13) is separate or separable from the control device (11),
**characterized in that**
the data transfer between the memory part (13) and the control device (11) is effected in a wireless manner and the memory part (13) is formed by a RFID element.

## Revendications

1. Système de gestion d'immeuble (1) pour la commande d'actionneurs (10) disposés de manière répartie avec une unité de commande (2) centrale ainsi qu'au moins un actionneur (10) commandé par l'unité de commande (2) centrale, l'actionneur (10) présentant
- un appareil de commande (11) qui est réalisé afin de recevoir des ordres de commande de l'unité de commande centrale (2) et d'utiliser l'actionneur (10) en fonction de ces ordres de commande, ainsi que
- un élément de mémoire (13) pour l'enregistrement d'informations importantes pour le fonctionnement,
et l'élément de mémoire (13) étant ou pouvant être séparé de l'appareil de commande (11), **caractérisé en ce que**
l'élément de mémoire (13) est formé par un élément de mémoire interchangeable et **en ce que** l'actionneur (10) ou l'appareil de commande (11) présente un slot pour l'élément de mémoire interchangeable.

2. Système de gestion d'immeuble selon l'une quelconque des revendications précédentes,
**caractérisé en ce**
**que** l'élément de mémoire (13) est lisible exclusivement par l'appareil de commande (11).

3. Système de gestion d'immeuble selon la revendication 1 ou 2,
**caractérisé en ce**
**que** l'élément de mémoire (13) est lisible ainsi qu'inscriptible par l'appareil de commande (11).

4. Système de gestion d'immeuble selon la revendication 2 ou 3,
**caractérisé en ce**
**que** l'appareil de commande (11) présente un appareil de lecture ou un appareil d'écriture/lecture ou est relié à un tel appareil.

5. Système de gestion d'immeuble selon la revendication 3 et 4,
**caractérisé en ce**
**que** l'appareil de commande (11) est réalisé afin de détecter ou d'inscrire automatiquement des données de fonctionnement de l'actionneur (10) et de les enregistrer dans l'élément de mémoire (13).

6. Système de gestion d'immeuble selon la revendication 5,
**caractérisé en ce**
**que** l'inscription des données de fonctionnement est effectuée régulièrement.

7. Système de gestion d'immeuble selon la revendication 5 ou 6,
**caractérisé en ce**
**que** l'inscription des données de fonctionnement est effectuée en fonction d'événements de fonctionnement déterminés.

8. Système de gestion d'immeuble selon l'une quelconque des revendications 2 à 7,
**caractérisé en ce**
**que** la transmission des données est effectuée sans fil entre l'élément de mémoire (13) et l'appareil de commande (11).

9. Système de gestion d'immeuble selon la revendication 8,
**caractérisé en ce**
**que** l'élément de mémoire (13) est formé par un élément RFID.

10. Système de gestion d'immeuble selon l'une quelconque des revendications 1 à 8,
**caractérisé en ce**
**que** l'élément de mémoire (13) est formé par une carte SIM.

11. Système de gestion d'immeuble selon l'une quelconque des revendications précédentes,
**caractérisé en ce**
**que** l'élément de mémoire (13) est lisible et/ou inscriptible par l'unité de commande (2) centrale.

12. Système de gestion d'immeuble selon l'une quelconque des revendications précédentes,
**caractérisé en ce**
**qu'**il s'agit pour l'actionneur d'une lampe (10) d'un système d'éclairage.

13. Système de gestion d'immeuble selon la revendication 12,
**caractérisé en ce**
**que** l'appareil de commande est formé par un ballast (11) électronique
pour le fonctionnement d'une lampe, en particulier d'une lampe à décharge (LA).

14. Système de gestion d'immeuble (1) pour la commande d'actionneurs (10) disposés de manière répartie avec une unité de commande (2) centrale ainsi qu'au moins un actionneur (10) commandé par l'unité de commande (2) centrale,
l'actionneur (10) présentant
- un appareil de commande (11) qui est réalisé afin de recevoir des ordres de commande de l'unité de commande centrale (2) et d'utiliser l'actionneur (10) en fonction de ces ordres de commande, ainsi que
- un élément de mémoire (13) pour l'enregistrement d'informations importantes pour le fonctionnement, et l'élément de mémoire (13) étant ou pouvant être séparé de l'appareil de commande (11),
**caractérisé en ce**
**que** la transmission des données entre l'élément de mémoire (13) et l'appareil de commande (11) est effectuée sans fil et l'élément de mémoire (13) est formé par un élément RFID.

15. Actionneur (10) pour l'utilisation dans un système de gestion d'immeuble (1), l'actionneur (10) présentant
- un appareil de commande (11) qui est réalisé afin de recevoir des ordres de commande d'une unité de commande centrale (2) du système de gestion d'immeuble (1) et d'utiliser l'actionneur (10) en fonction de ces ordres de commande, ainsi que
- un élément de mémoire (13) pour l'enregistrement d'informations importantes pour le fonctionnement,
et l'élément de mémoire (13) étant ou pouvant être séparé de l'appareil de commande (11),
**caractérisé en ce**
**que** l'élément de mémoire (13) est formé par un élément de mémoire interchangeable et en ce que l'actionneur (10) ou l'appareil de commande (11) présente un slot pour l'élément de mémoire interchangeable.

16. Actionneur selon la revendication 15,
**caractérisé en ce**
**que** l'élément de mémoire (13) est lisible exclusivement par l'appareil de commande (11).

17. Actionneur selon la revendication 15 ou 16,
**caractérisé en ce**
**que** l'élément de mémoire (13) est lisible ainsi qu'inscriptible par l'appareil de commande (11).

18. Actionneur selon la revendication 16 ou 17,
**caractérisé en ce**
**que** l'appareil de commande (11) présente un appareil de lecture ou un appareil d'écriture/de lecture ou est relié à un tel appareil.

19. Actionneur selon les revendications 17 et 18,
**caractérisé en ce**
**que** l'appareil de commande (11) est réalisé afin de détecter ou d'inscrire automatiquement des données de fonctionnement de l'actionneur et de les enregistrer dans l'élément de mémoire (13).

20. Actionneur selon la revendication 19,
**caractérisé en ce**
**que** l'inscription des données de fonctionnement est effectuée régulièrement.

21. Actionneur selon la revendication 19 ou 20,
**caractérisé en ce**
**que** l'inscription des données de fonctionnement est effectuée en fonction d'événements de fonctionnement déterminés.

22. Actionneur selon l'une quelconque des revendications 15 à 21,
**caractérisé en ce**
**que** la transmission des données est effectuée sans fil entre l'élément de mémoire (13) et l'appareil de commande (11).

23. Actionneur selon la revendication 22,
**caractérisé en ce**
**que** l'élément de mémoire (13) est formé par un élément RFID.

24. Actionneur selon l'une quelconque des revendications 15 à 21,
**caractérisé en ce**
**que** l'élément de mémoire (13) est formé par une carte SIM.

25. Actionneur selon l'une quelconque des revendications 15 à 24,
**caractérisé en ce**
**qu'**il s'agit d'une lampe (10).

26. Actionneur selon la revendication 25,
**caractérisé en ce**
**que** l'appareil de commande est formé par un ballast (11) électronique
pour le fonctionnement d'une lampe, en particulier d'une lampe à décharge (LA).

27. Actionneur (10) destiné à l'utilisation dans un système de gestion d'immeuble (1),
l'actionneur (10) présentant
- un appareil de commande (11) qui est réalisé afin de recevoir des ordres de commande d'une unité de commande centrale (2) du système de gestion d'immeuble (1) et d'utiliser l'actionneur (10) en fonction de ces ordres de commande, ainsi que
- un élément de mémoire (13) pour l'enregistrement d'informations importantes pour le fonctionnement, et l'élément de mémoire (13) étant ou pouvant être séparé de l'appareil de commande (11),
**caractérisé en ce**
**que** la transmission des données entre l'élément de mémoire (13) et
l'appareil de commande (11) est effectuée sans fil et l'élément de mémoire (13) est formé par un élément RFID.
